# FASCICULE DE BREVET EUROPEEN

(11) **EP 3 290 897 B1**
(45) Date de publication et mention de la délivrance du brevet: **12.02.2020**
(21) Numéro de dépôt: 17188927.2
(22) Date de dépôt: 01.09.2017
(51) Int. Cl.: G01M 15/02, F01D 21/00, F02C 7/045, G10K 11/178, B64F 5/60, G01M 15/14, F02K 1/44, F02K 1/82

(54) **BANC D'ESSAI DE TURBOMACHINE AVEC CONTRÔLE ACTIF DU BRUIT**
PRÜFSTAND EINER TURBOMASCHINE MIT AKTIVER LÄRMKONTROLLE
TURBOMACHINE TEST BENCH WITH ACTIVE NOISE CONTROL

(30) Priorité: 05.09.2016 BE 165678
(43) Date de publication de la demande: 07.03.2018
(73) Titulaire: Safran Aero Boosters SA, 4041 Herstal (BE)
(72) Inventeur: MEYS, Benoît, 4347 Fexe-Le-Haut-Clocher (BE); LACROIX, Alain, 4160 Anthisnes (BE)
(74) Mandataire: Lecomte & Partners

(56) Documents cités:
- EP-A1- 3 021 102
- US-A- 5 650 599
- US-A1- 2011 138 772
- US-A1- 2015 134 270

## Description

### Domaine technique

L'invention se rapporte au domaine des bancs d'essai de turbomachine. Plus précisément, l'invention se rapporte à un banc d'essai pour turboréacteurs muni d'un système actif d'atténuation des émissions sonores dans et hors du banc d'essai. L'invention a également pour objet un procédé d'atténuation des émissions sonores d'un banc d'essai pour turboréacteur. L'invention a également pour objet un procédé d'atténuation des émissions sonores d'un banc d'essai pour turboréacteur.

### Technique antérieure

Lors de la conception, de la production, ou de l'entretien ; un turboréacteur d'avion est testé dans un banc d'essai spécifique. Un tel banc d'essai permet d'éprouver le fonctionnement réel du turboréacteur tout en y effectuant des mesures. Les débits, les températures et les pressions peuvent notamment y être mesurés lors de phases de tests de fonctionnement réel. Or pendant ces tests réels, le turboréacteur émet des ondes sonores pouvant dépasser 140 dB. Les silencieux d'échappement passifs classiques sont déficients dans les basses fréquences où l'impédance d'entrée d'un revêtement absorbant serait si grande qu'elle empêche pratiquement l'écoulement acoustique au travers du revêtement. Ces ondes sonores excitent aussi en vibration les équipements du banc d'essai et peuvent les endommager.

De plus, ces ondes se propagent dans les salles de contrôles et en dehors du banc d'essai où elles nuisent à l'environnement. Le niveau sonore perturbe fortement les occupants d'habitations voisines ou éloignées. La zone impactée par la puissance acoustique du turboréacteur est particulièrement vaste, surtout dans le cas de turboréacteurs d'avions gros porteurs, ou encore de turboréacteurs fonctionnant avec une post combustion.

Alors que les technologies de l'annulation active ont été développées pour différents environnements, l'approche conventionnelle consistant à générer une onde d'annulation n'est pas facilement adaptable au problème d'échappement du moteur à réaction ou à toute autre application où la vitesse d'écoulement dans le passage est suffisamment élevée pour interférer avec la détection de l'onde sonore qui approche. Par ailleurs, les propriétés du jet d'échappement sont hostiles en raison de leur température, de leurs turbulences, et de la présence de gaz corrosifs.

En conséquence, une interface directe de détection et de pilote pour le conduit d'évacuation n'est pas aisée à mettre en œuvre. En outre, les systèmes précédemment connus d'atténuation acoustique active accomplissent l'atténuation du son par l'introduction, dans la canalisation d'un son d'annulation qui est idéalement une image miroir du bruit indésirable entrant. Cela annule le bruit en aval de la source sonore et l'introduction d'une nouvelle onde sonore qui se propage vers l'amont. Cependant, si la source du bruit introduite n'absorbe pas le bruit amont, comme il n'y a pas de section dissipative effective entre la source de bruit et le transducteur, l'énergie acoustique peut se former à un niveau élevé dans le conduit en amont. Il en résulte une grande pression acoustique à travers la section de silencieux actif, mais seulement une réduction beaucoup plus faible du bruit se propageant vers l'aval.

Dans le domaine des silencieux actifs, il est connu de placer des haut-parleurs dans une chambre logeant un conduit collecteur du jet d'échappement. Les haut-parleurs entourent le conduit, et sont actionnés pour y réduire la pression acoustique. Ainsi, le débit acoustique augmente au travers de la paroi poreuse, qui à son tour augmente la dissipation de l'énergie acoustique dans le conduit. Le document WO95/19075 A2 divulgue un banc d'essai pour turboréacteur. Le banc d'essai présente un échappement avec un silencieux actif agissant sur les basses fréquences. Le silencieux traite des fréquences de 10 à 80 Hz pour un turboréacteur. Il comporte un passage entouré par une couche poreuse, et plusieurs chambres annulaires autour de la couche poreuse. Plusieurs microphones sont reliés à un contrôleur qui commande des haut-parleurs disposés dans les chambres annulaires. Ce système permet effectivement de réduire le niveau sonore émis hors du banc d'essai. Cet appareil est particulièrement efficace dans les basses fréquences. Toutefois son efficacité reste limitée.

Un autre exemple de banc d'essai à efficacité limitée est décrit dans le document US 5,662,136 A.

Enfin, un exemple de banc d'essai avec des haut-parleurs excentrés est décrit dans le document US 5,650,599.

### Résumé de l'invention

### Problème technique

L'invention a pour objectif de résoudre au moins un des problèmes posés par l'art antérieur. Plus précisément, l'invention a pour objectif d'améliorer l'efficacité d'un système actif d'atténuation des émissions sonores dans un banc d'essai de turbomachine. L'invention a également pour objectif d'augmenter la durée de vie d'un banc d'essai de turbomachine. L'invention a également pour objectif de proposer une solution simple, économique, et fiable.

### Solution technique

L'invention a pour objet un banc d'essai pour turbomachine selon la revendication 1.

L'amont et l'aval sont en référence au sens d'écoulement principal du flux dans la turbomachine.

Selon un mode avantageux de l'invention, le banc d'essai comprend un tube en aval de la zone d'installation de turbomachine, la zone d'atténuation étant agencée le long du tube.

Selon un mode avantageux de l'invention, le premier microphone est disposé en amont du tube.

Selon un mode avantageux de l'invention, le deuxième microphone est disposé en aval du tube.

Selon un mode avantageux de l'invention, le banc d'essai comprend une paroi structurelle en aval du tube, le deuxième microphone étant plus proche du tube que de la paroi structurelle, ladite paroi structurelle étant éventuellement perpendiculaire à l'allongement principal du banc d'essai. L'allongement principal du banc d'essai est une direction préférablement coaxiale ou parallèle à l'axe central de la turbomachine.

Selon un mode avantageux de l'invention, le banc d'essai comprend un passage pour un flux de la turbomachine, le premier microphone et/ou le deuxième microphone étant disposé dans ledit passage.

Selon un mode avantageux de l'invention, le premier microphone et le deuxième microphone sont écartés axialement d'une distance D supérieure ou égale à 1 m, ou 5 m, ou 10 m ou 20 m.

Selon un mode avantageux de l'invention, la zone d'installation de turbomachine comporte un axe central, éventuellement coaxial avec l'axe de rotation de la turbomachine, au moins un ou chaque microphone étant disposé sur l'axe central ; ou décalé de moins de 1 m, ou de 2 m, par rapport audit axe central.

Selon un mode avantageux de l'invention, le premier microphone est davantage distant de l'axe central que le deuxième microphone.

Selon un mode avantageux de l'invention, le banc d'essai comprend un couloir droit dans lequel sont agencés la zone d'installation de turbomachine et le deuxième microphone.

Selon un mode avantageux de l'invention, le banc d'essai comprend des cheminées avec des systèmes passifs d'atténuation du bruit se propageant hors du banc d'essai.

Selon un mode avantageux de l'invention, au moins un ou chaque microphone est disposé en dehors des cheminées.

Selon un mode avantageux de l'invention, le deuxième microphone est à l'aplomb d'une des cheminées.

Selon un mode avantageux de l'invention, le banc d'essai est adapté pour un turboréacteur d'avion exerçant une poussée supérieure ou égale à 80 kN ou à 200kN. Lorsque le banc est muni de cheminées, celles-ci sont espacées de plusieurs dizaines de mètres. La structure porteuse du banc d'essai est aussi apte à recevoir ce type de poussée sans être détériorée.

Selon un mode avantageux de l'invention, le premier microphone est à distance du prolongement vertical des cheminées.

Selon un mode avantageux de l'invention, le premier microphone et/ou le deuxième microphone sont disposés en dehors du tube.

Selon un mode avantageux de l'invention, le tube est apte à collecter un flux gazeux entraîné par la turbomachine.

Selon un mode avantageux de l'invention, le banc d'essai et/ou le couloir mesurent plus de 10 m de long, préférentiellement plus de 30 m de long, plus préférentiellement plus de 80 m de long. La longueur peut être mesurée en ligne droite.

Selon un mode avantageux de l'invention, la zone d'installation de turbomachine présente une section de passage supérieure ou égale à 4 m2, ou à 25 m2, ou à 50 m2, ou à 100 m2.

Selon un mode avantageux de l'invention la zone d'installation de turbomachine comprend un bras de fixation de la turbomachine, notamment avec une interface turbomachine, le bras de fixation et/ou l'interface turbomachine étant en amont du premier microphone.

Selon un mode avantageux de l'invention, la turbomachine est apte à exercer une poussée axiale supérieure ou égale à 20 kN, préférentiellement supérieure ou égale à 80 kN, plus préférentiellement supérieure ou égale à 200 kN, éventuellement supérieure ou égale à 500 kN. Le bras de fixation étant conçu pour reprendre les efforts correspondants.

Selon un autre mode de réalisation dans lequel le premier microphone n'est pas un aspect indispensable de l'invention, l'invention a pour objet un banc d'essai de turbomachine, le banc d'essai comprenant : une zone d'installation de turbomachine ; un système actif d'atténuation des émissions sonores produites par la turbomachine, le système actif comportant une zone d'atténuation avec des moyens adaptés pour émettre des ondes sonores d'atténuation des ondes turbomachine; remarquable en ce que le système actif d'atténuation du bruit comprend en outre un microphone disposé en aval de la zone d'atténuation sonore.

L'invention a également pour objet un procédé d'atténuation, d'atténuation des émissions sonores d'une turbomachine testée dans un banc d'essai tel que décrit précédemment, le banc d'essai comprenant un équipement avec une fréquence propre, le procédé comprenant les étapes suivantes : (a) test de la turbomachine ; (b) émission d'ondes sonores d'atténuation adaptées pour s' opposer aux ondes sonores émises par la turbomachine pendant l'étape (a) test le système actif émettant des ondes d'atténuation à la fréquence propre de l' équipement.

Selon un mode avantageux de l'invention, lors de l'étape (a) test, l'équipement vibre à sa fréquence propre, et éventuellement à une harmonique de sa fréquence propre ; lors de l'étape (b) émission, les ondes d'atténuation atteignent ledit équipement en opposition de phase par rapport à sa vibration lors de l'étape (a) test.

Selon un mode avantageux de l'invention, la zone d'atténuation est disposée en aval de l'équipement.

Selon un mode avantageux de l'invention, lors de l'étape (b) émission, le système actif est configuré pour adapter les ondes d'atténuation à la réverbération dans le banc d'essai, notamment au niveau du deuxième microphone.

Selon un mode avantageux de l'invention, lors de l'étape (a) test, la turbomachine produit un son supérieur à 100 dB, ou à 110dB, ou à 120 dB, ou à 130 dB, ou à 140 dB, ou à 150 dB.

Selon un mode avantageux de l'invention, lors de l'étape (a) test, la turbomachine entraîne un flux d'air se déplaçant à au moins 50 m/s, ou 100 m/s, ou 200 m/s, ou 300 m/s, ou 400 m/s, la vitesse étant mesurée dans la turbomachine et/ou dans la zone d'installation de la turbomachine, et/ou dans le tube, et/ou dans la zone d'atténuation, et/ou au niveau d'un ou de chacun des microphones.

De manière générale, les modes avantageux de chaque objet de l'invention sont également applicables aux autres objets de l'invention. Sauf incompatibilité, chaque objet de l'invention est combinable aux autres objets.

### Avantages apportés

L'invention permet une meilleure atténuation des ondes se propageant en dehors du banc. Elle les traite à proximité de la source. L'emploi d'un microphone aval permet de contrôler l'effet de la correction apportée, notamment en temps réel. Dès lors, la correction ne reste pas que théorique, elle est adaptée à l'effet qu'elle produit in situ.

Grâce à la mesure additionnelle qu'offre le microphone aval, le système actif peut optimiser la correction émise par les haut-parleurs. Par ce biais, les fréquences qui ne sont pas suffisamment atténuées au niveau du microphone aval peuvent être traitées avec des ondes en opposition de phase de plus grande amplitude.

L'invention permet de simplifier les systèmes d'atténuation passifs. Le nombre de rangées de baffles acoustiques peut être réduit. Dès lors, la cheminée de sortie peut être raccourcie. Ainsi, le coût du banc d'essai diminue de deux manières.

### Brève description des dessins

La figure 1 représente un banc d'essai de turbomachine selon l'invention.
La figure 2 est un schéma d'une portion du banc d'essai de la figure 1.
La figure 3 illustre un diagramme du procédé d'atténuation des émissions sonores selon l'invention.

### Description des modes de réalisation

Dans la description qui va suivre, les termes interne et externe renvoient à un positionnement par rapport à l'axe de rotation d'une turbomachine. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

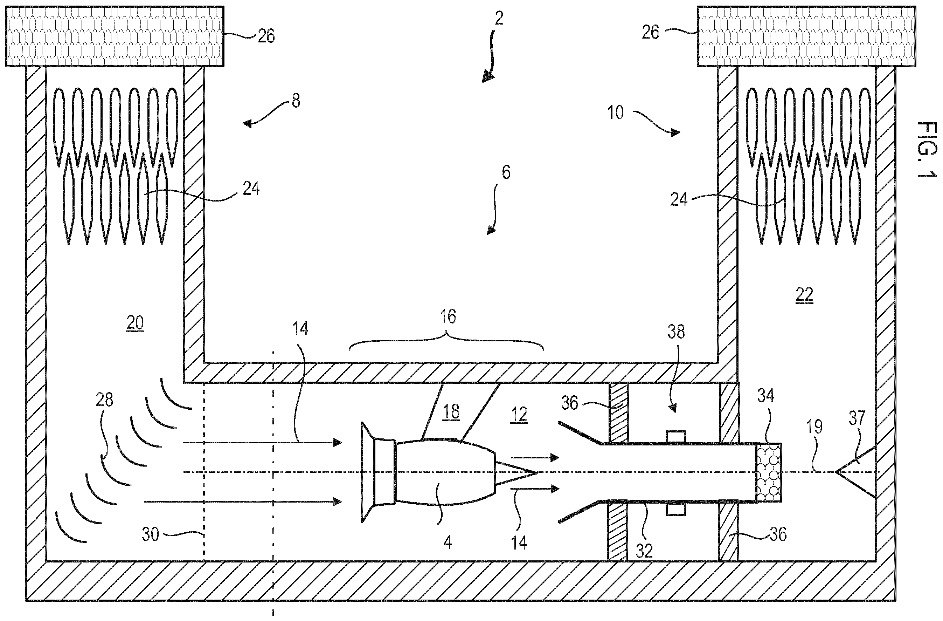

La figure 1 représente de manière simplifiée un banc d'essai 2 moteur 4, plus particulièrement un banc d'essai 2 pour turbomachine 4, notamment pour turboréacteur 4 d'avion. Le banc d'essai 2 pourrait éventuellement recevoir un avion complet, ou du moins une partie d'avion.

Le banc d'essais 2 forme une infrastructure, une construction. Il comprend un passage 6 avec une entrée 8 et une sortie 10. Le passage 6 peut comprendre un couloir 12 essentiellement allongé. Sa longueur peut être supérieure ou égale à 60 m. La longueur du couloir 12 permet la circulation en ligne droite d' un flux d'air 14 en limitant la formation de tourbillons nuisant à la qualité de l'essai.

Afin de limiter la résistance à l'écoulement au travers du couloir 12, en particulier la résistance s'opposant à l'entrée d'un flux d'air 14 dans la turbomachine 4, le couloir 12 peut présenter une section de passage supérieure ou égale à 50 m². Notons que le flux d'air 14 traversant le banc d'essai 2 peut être entraîné par la turbomachine 4 elle-même pendant sa phase de test. La section de passage, ou section libre, peut être mesurée en amont de la zone d'installation 16 de la turbomachine 4. La section de passage peut être conservée sur au moins un quart de la longueur du couloir 12, préférentiellement sur la majorité.

La zone d'installation 16 peut être une zone de fixation de la turbomachine 4. Elle peut être munie d'un bras de fixation 18 auquel la turbomachine 4 est fixée pendant son test. Le bras 18 peut s'étendre verticalement depuis le plafond du couloir 12, à la manière d'une colonne ou d'un poteau. Le bras 18 permet de monter la turbomachine 4 avec un déport, et de centrer cette dernière par rapport au milieu du couloir 12, notamment par rapport à un axe central 19 du couloir 12. Le centrage est vertical et horizontal.

Le couloir 12 peut être délimité par des cheminées verticales 20, 22 en entrée 8 et en sortie 10. Elles permettent une admission d'air et un échappement tous deux verticaux, et en élévation par rapport au couloir 12. Pour réduire les nuisances sonores, elles peuvent comporter des baffles sonores 24, ou lames acoustiques 24, permettant d'absorber des ondes sonores de manière passive. Des dispositifs 26 complémentaires peuvent être présents en entrée 8 et en sortie 10 pour éviter des inversions d'écoulements, qui perturberaient les conditions de tests. La configuration en « U » détaillée ici n'est pas indispensable ; d'autres configurations ; par exemple sans cheminées ; sont envisageables. Une chambre seule peut former le passage. L'essai peut être à l'air libre.

A la jonction entre la cheminée amont et le couloir 12, le banc 2 est équipé d'une série de lames de déviation 28. Elles permettent de renvoyer l'air descendant de la cheminée d'entrée 20 dans une direction horizontale. Elles s'étendent horizontalement, et traversent tout le couloir 12. Elles présentent des profils courbes. En entrée du couloir 12, le banc 2 présente optionnellement une grille 30 permettant d'intercepter des débris susceptibles de perturber l'essai et d'endommager la turbomachine 4.

En aval de la turbomachine 4, le banc 2 comporte un tube 32 collectant le flux d'air 14 propulsé par la turbomachine 4 ; dont ses gaz d'échappement. L'embouchure du tube peut former un entonnoir, un cône amont convergeant vers l'aval. Le tube collecteur 32 contribue à absorber le bruit généré lors de l'essai. Le tube collecteur 32 est disposé horizontalement et comprend optionnellement un diffuseur 34 à sa sortie. Il peut former un tube à paroi perforée. Ce diffuseur 34 est également connu sous l'expression anglo-saxonne « blast basket ». Le diffuseur 34 peut être dans la cheminée de sortie 22.

Le tube collecteur 32 peut être maintenu dans le banc 2 à l'aide d'au moins une cloison 36, préférentiellement de deux cloisons 36. Ces cloisons 36 s'étendent verticalement et transversalement dans le couloir 12. L'une d'elle peut former une séparation entre le couloir 12 et la cheminée de sortie 22. Elles forment des séparations étanches, qui permettent de contenir le flux 14 issu la turbomachine 4.

Pour dévier le flux issu du tube collecteur 32, et de l'optionnel diffuseur 34, un cône 37 peut être mis dans le prolongement du tube collecteur 32. Il peut être fixé à une paroi verticale en fin de couloir 12. Sa pointe peut coïncider avec l'axe central 19.

Afin de traiter au mieux les émissions sonores, le banc d'essai 2 est muni d'un système actif 38 d'atténuation des émissions sonores. Le système actif 38 traite les émissions produites par la turbomachine 4, et peut également prendre en compte les phénomènes de réverbération d'ondes contre les parois du banc d'essai 2. En effet, les parois du couloir 12 offrent de grandes surfaces réflectrices.

Bien que le système actif 38 soit représenté en association avec le tube 32, il est également envisageable de réaliser un système actif d'atténuation des émissions sonores sans tube, ou à distance du tube collecteur 32.

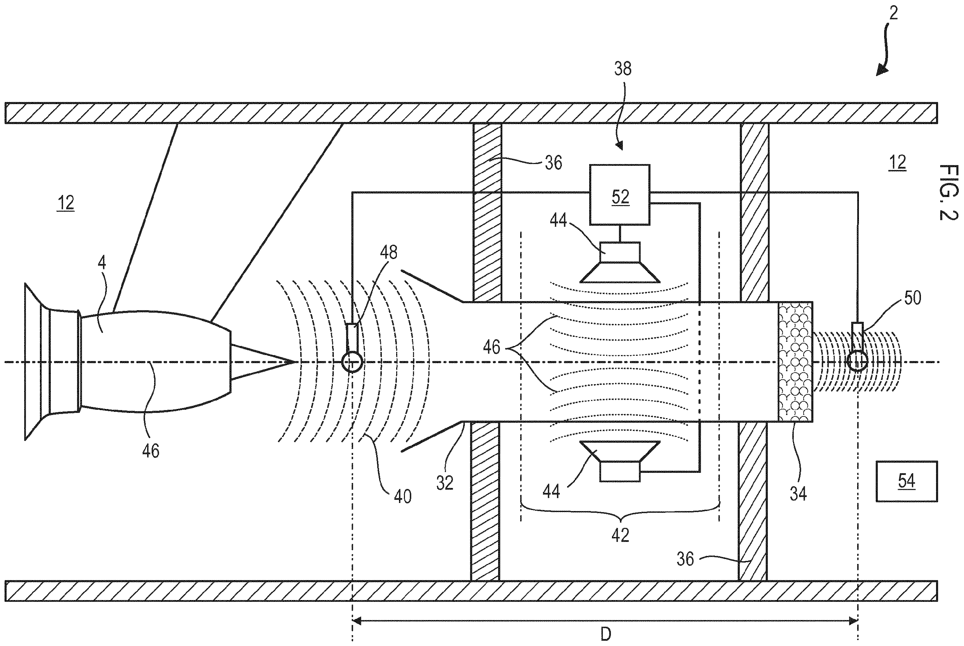

La figure 2 montre une portion du banc d'essai 2 de la figure 1. Il y apparaît la turbomachine 4, un tronçon du couloir 12, le tube collecteur 32, le diffuseur 34, et le système actif 38.

Lors de son fonctionnement la turbomachine 4, produit des ondes sonores 40, ou ondes moteur. Elles sont des ondes de pression considérées comme nuisible, et ce à plus d'un titre. Les ondes turbomachine 40 peuvent être des ondes large-bande. Une telle onde large-bande peut comprendre des composantes ayant des fréquences comprises entre 10Hz et 4000Hz, ou entre 80Hz et 800Hz. Au niveau de la turbomachine 4, le niveau sonore de ces ondes turbomachine 40 peut dépasser les 140dB, ce qui risque de perturber l'environnement du banc d'essai 2.

En réponse, le système actif 38 comporte une zone d'atténuation 42 où des ondes sonores 46 sont émises pour contrer les ondes turbomachine 40. Cette zone d'atténuation 42 regroupe des moyens 44 adaptés pour émettre des ondes sonores 46 qui s'opposent au passage, à la propagation des ondes turbomachine 40. Par exemple, les ondes sonores d'atténuation 46 peuvent venir en opposition de phase contre les ondes turbomachine 40 pour réduire leurs amplitudes. Le mélange, la somme de leurs champs de pressions fluctuantes tend à s'annuler.

Les moyens d'émission 44 peuvent comprendre des sources sonores, tels des haut-parleurs. Bien qu'une seule source puisse être suffisante, plusieurs sources sonores peuvent être employées. Les sources sonores peuvent être réparties autour du tube 32, en une ou plusieurs rangées circulaires. Les moyens d'émission 44 peuvent agir au travers du tube 32, ou grâce à des ouvertures pratiquées dans le tube 32. Les moyens d'émission 44 peuvent être directement exposés aux ondes turbomachine 40, et donc aux gaz d'échappement de la turbomachine 4. Les moyens d'émission 44 peuvent être placés dans le couloir 12. Ils peuvent être entre les cloisons 36. Ces dernières peuvent former une chambre protégeant les moyens d'émission 44, en combinaison avec le tube 32.

Le système actif 38 comporte en outre un premier microphone 48, tel un microphone amont ; et un deuxième microphone 50, tel un microphone aval ; qui sont tous deux branchés à une unité de commande 52. Le système actif 38 d'atténuation du bruit est configuré pour réduire les émissions sur la base des mesures du premier microphone 48 et du deuxième microphone 50 placé en aval du premier.

Grâce aux mesures des microphones 48, 50, l'unité de commande 52 définit un signal électrique alimentant les moyens d'émission 44 pour qu'ils produisent des ondes 46 réduisant l'amplitude du son sortant du tube 32. L'unité de commande 52 définit un signal électrique de correction en prenant en compte les positions respectives des microphones, les positions des moyens d'émission 44. La vitesse d'écoulement du flux entraîné par la turbomachine 4 peut également être prise en compte. Des corrections en fonction du milieu physique peuvent être apportées. Dès lors, le son sortant de la cheminée en sortie est réduit. En sus, l'action des baffles acoustiques qui s'y trouvent est simplifiée.

Le premier microphone 48 est placé en regard de la turbomachine 4, il permet de mesurer le son qui en sort. Il baigne à la fois dans le flux propulsé par la turbomachine 4, mais également dans son champ sonore. Le premier microphone 48 est agencé en amont de la zone d'atténuation 42. Il est placé en amont du tube 32, mais il pourrait également être placé à l'intérieur en alternative.

Le deuxième microphone 50 est placé en aval de la zone d'atténuation 42, par exemple en dehors du tube 32. Toutefois il pourrait être agencé dedans en variante. Le deuxième microphone 50 permet de contrôler l'effet de la correction. Si nécessaire, l'unité de commande 52 module la correction à apporter en fonction des mesures effectuées par le deuxième microphone 50. L'unité de commande 52 peut augmenter ou diminuer certaines composantes du signal large bande qu'il définit.

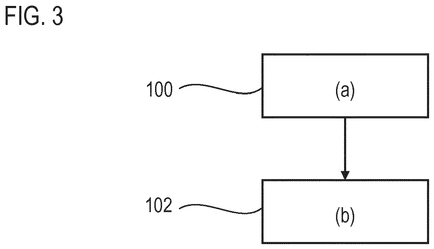

Le banc d'essai 2 comporte différents équipements 54. Par exemple des capteurs, des structures de support. Lors du fonctionnement, ces équipements 54 vibrent en raison du caractère oscillatoire de la pression acoustique régnant dans le banc d'essai 2. Ces vibrations peuvent réduire la durée de vie de l'équipement ; et éventuellement les détruire. Ce phénomène peut s'observer lorsque les ondes turbomachine 40 sont à la fréquence propre dudit équipement 54, et à une harmonique de cette fréquence. Afin de contrer ce phénomène, les ondes d'atténuation 46 peuvent être adaptées pour corriger ce phénomène. Le tube collecteur 32 peut se comporter comme ledit équipement. La figure 3 montre un diagramme du procédé d'atténuation, ou procédé de contrôle, des émissions sonores vers l'environnement d'un banc d'essai dans laquelle une turbomachine est testée. Le banc d'essai peut correspondre à celui décrit en relation avec les figures 1 et 2.

Le procédé peut comprendre les étapes suivantes :
(a) test 100 de la turbomachine ; et
(b) émission 102 d'ondes sonores d'atténuation adaptées pour s'opposer aux ondes sonores émises par la turbomachine pendant l'étape (a) test 100.

Pendant l'étape (a) test 100, l'équipement est excité en vibration en raison des émissions sonores produites par la turbomachine. L'équipement peut vibrer à sa fréquence propre. Il peut également vibrer à une ou plusieurs harmoniques de sa fréquence propre. Le comportement vibratoire de l'équipement peut inclure plusieurs fréquences s'additionnant, dont sa fréquence propre et une ou plusieurs harmoniques.

Lors de l'étape (b) émission, le système actif d'atténuation émet en réponse des ondes sonores à la fréquence propre de l'équipement. Lors de l'étape (b) émission, les ondes d'atténuation atteignent ledit équipement en opposition de phase par rapport à sa vibration lors de l'étape (a) test 100. Avantageusement, les ondes sonores d'atténuation comprennent un signal composé, avec plusieurs fréquences s'additionnant. Les différentes fréquences peuvent présenter des amplitudes différentes. La définition des ondes sonores d'atténuation peut reposer sur les mesures du premier microphone et du deuxième microphone. Le signal composé peut s'adapter aux réverbérations. Une phase d'apprentissage ou une phase d'étalonnage peut permettre d'affiner l'atténuation sonore que procure le système actif.

## Revendications

1. Banc d'essai (2) pour turbomachine (4), le banc d'essai (2) comprenant :
- une zone d'installation (16) de turbomachine (4) ;
- un système actif (38) d'atténuation des ondes sonores émises (40) par une turbomachine (4), le système actif (38) comportant un premier microphone (48) disposé en aval de la zone d'installation de la turbomachine (4), et une zone d'atténuation (42) des ondes émises par la turbomachine (40) avec des moyens (44) adaptés pour émettre des ondes sonores d'atténuation (46);
dans lequel
le système actif (38) comprend en outre un deuxième microphone (50) disposé en aval de la zone d'atténuation (42),
le système actif (38) étant configuré pour atténuer les ondes émises (40) en fonction des mesures du premier microphone (48) et du deuxième microphone (50),
la zone d'atténuation (42) étant située entre le premier microphone (48) et le deuxième microphone (50),
le banc comprenant un tube (32) en aval de la zone d'installation (16) de turbomachine (4), la zone d'atténuation (42) étant agencée le long du tube (32), **caractérisé en ce que**
le banc comprenant en outre deux cloisons (36) formant, avec le tube (32), une chambre accueillant les moyens d'émission (44), le premier et le second microphones (48, 50) étant disposés en dehors de la chambre.

2. Banc d'essai (2) selon la revendication 1, **caractérisé en ce que** le premier microphone (48) est disposé en amont du tube (32).

3. Banc d'essai (2) selon l'une des revendications 1 à 2, **caractérisé en ce que** le deuxième microphone (50) est disposé en aval du tube (32).

4. Banc d'essai (2) selon l'une des revendications 1 à 3, **caractérisé en ce qu'**il comprend une paroi structurelle en aval du tube (32), le deuxième microphone (50) étant plus proche du tube (32) que de la paroi structurelle, ladite paroi structurelle étant éventuellement perpendiculaire à l'allongement principal du banc d'essai (2).

5. Banc d'essai (2) selon l'une des revendications 1 à 4, **caractérisé en ce qu'**il comprend un passage (6) pour un flux de la turbomachine (4), le premier microphone (48) et/ou le deuxième microphone (50) étant disposé dans ledit passage (6).

6. Banc d'essai (2) selon l'une des revendications 1 à 5, **caractérisé en ce que** le premier microphone (48) et le deuxième microphone (50) sont écartés axialement d'une distance D supérieure ou égale à 1 m, ou 5 m, ou 10 m ou 20m.

7. Banc d'essai (2) selon l'une des revendications 1 à 6, **caractérisé en ce que** la zone d'installation (16) de turbomachine (4) comporte un axe central (19), éventuellement coaxial avec l'axe de rotation de la turbomachine (4), au moins un ou chaque microphone (48 ; 50) étant disposé sur l'axe central (19); ou décalé de moins de 1 m, ou de 2 m, par rapport audit axe central (19).

8. Banc d'essai (2) selon l'une des revendications 1 à 7, **caractérisé en ce qu'**il comprend des cheminées (20 ; 22) avec des systèmes passifs (24) d'atténuation du bruit se propageant hors du banc d'essai (2).

9. Banc d'essai (2) selon la revendication 8, **caractérisé en ce qu'**au moins un ou chaque microphone (48 ; 50) est disposé en dehors des cheminées (20 ; 22).

10. Banc d'essai (2) selon l'une des revendications 8 à 9, **caractérisé en ce que** le deuxième microphone (50) est à l'aplomb d'une des cheminées (20 ; 22).

11. Procédé d'atténuation des émissions sonores d'une turbomachine (4) testée dans un banc d'essai (2) conforme à l'une des revendications 1 à 10, le banc d'essai (2) comprenant un équipement (54) avec une fréquence propre, le procédé comprenant les étapes suivantes :
(a) test (100) de la turbomachine (4) ;
(b) émission (102) d'ondes sonores d'atténuation (46) adaptées pour s'opposer aux ondes sonores (40) émises par la turbomachine (4) pendant l'étape (a) test (100), le système actif (38) émettant des ondes d'atténuation (46) à la fréquence propre de l'équipement (54).

12. Procédé selon la revendication 11, **caractérisé en ce que** lors de l'étape (a) test (100), l'équipement (54) vibre à sa fréquence propre, et éventuellement à une harmonique de sa fréquence propre et lors de l'étape (b) émission (102), les ondes d'atténuation (46) atteignent ledit équipement (54) en opposition de phase par rapport à sa vibration lors de l'étape (a) test (100).

13. Procédé selon l'une des revendications 11 à 12, **caractérisé en ce que** lors de l'étape (b) émission (102), le système actif (38) est configuré pour adapter les ondes d'atténuation (46) à la réverbération dans le banc d'essai (2), notamment au niveau du deuxième microphone (50).

## Patentansprüche

1. Prüfstand (2) für eine Turbomaschine (4), wobei der Prüfstand (2) Folgendes umfasst:
- eine Einbauzone (16) für eine Turbomaschine (4);
- ein aktives System (38) zum Dämpfen der von einer Turbomaschine (4) emittierten Schallwellen (40), wobei das aktive System (38) ein erstes Mikrofon (48), das stromabwärts der Turbomaschine (4) angeordnet ist, und eine Zone (42) zum Dämpfen der Turbomaschinenwellen (40) mit Mitteln (44) zum Aussenden von Dämpfungsschallwellen (46) beinhaltet;
wobei
das aktive System (38) ferner ein zweites Mikrofon (50) umfasst, das stromabwärts der Dämpfungszone (42) angeordnet ist,
wobei das aktive System (38) dazu konfiguriert ist, die Turbomaschinen-Schallwellen (40) als Funktion der Messungen vom ersten Mikrofon (48) und vom zweiten Mikrofon (50) zu dämpfen,
wobei die Dämpfungszone (42) zwischen dem ersten Mikrofon (48) und dem zweiten Mikrofon (50) angeordnet ist,
wobei der Prüfstand ein Rohr (32) stromabwärts der Einbauzone (16) für eine Turbomaschine (4) umfasst, wobei die Dämpfungszone (42) entlang des Rohres (32) angeordnet ist,
**dadurch gekennzeichnet, dass**
der Prüfstand ferner zwei Trennwände (36) umfasst, die mit dem Rohr (32) eine Kammer bilden, die die Mittel (44) zum Aussenden von Dämpfungs-Schallwellen aufnimmt, wobei das erste und das zweite Mikrofon (48, 50) außerhalb der Kammer angeordnet sind.

2. Prüfstand (2) nach Anspruch 1, **dadurch gekennzeichnet, dass** das erste Mikrofon (48) stromaufwärts des Rohres (32) und/oder stromaufwärts der Dämpfungszone (42) angeordnet ist.

3. Prüfstand (2) nach einem der Ansprüche 1 oder 2, **dadurch gekennzeichnet, dass** das zweite Mikrofon (50) stromabwärts des Rohres (32) angeordnet ist.

4. Prüfstand (2) nach einem der Ansprüche 1 bis 3, **dadurch gekennzeichnet, dass** er eine Strukturwand stromabwärts des Rohres (32) umfasst, wobei das zweite Mikrofon (50) näher am Rohr (32) als an der Strukturwand liegt und die Strukturwand möglicherweise senkrecht zur Hauptausdehnung des Prüfstandes (2) steht.

5. Prüfstand (2) nach einem der Ansprüche 1 bis 4, **dadurch gekennzeichnet, dass** er einen Durchgang (6) für eine Strömung aus der Turbomaschine (4) umfasst, wobei das erste Mikrofon (48) und/oder das zweite Mikrofon (50) in dem Durchgang (6) angeordnet sind.

6. Prüfstand (2) nach einem der Ansprüche 1 bis 5, **dadurch gekennzeichnet, dass** das erste Mikrofon (48) und das zweite Mikrofon (50) axial durch einen Abstand D voneinander getrennt sind, der größer oder gleich 1 m, oder 5 m, oder 10 m, oder 20 m ist.

7. Prüfstand (2) nach einem der Ansprüche 1 bis 6, **dadurch gekennzeichnet, dass** die Einbauzone (16) für eine Turbomaschine (4) eine Mittelachse (19) aufweist, die möglicherweise koaxial zur Drehachse der Turbomaschine (4) verläuft, wobei mindestens ein oder jedes Mikrofon (48; 50) auf der Mittelachse (19) angeordnet oder um weniger als 1 m oder weniger als 2 m gegenüber der Mittelachse (19) versetzt ist.

8. Prüfstand (2) nach einem der Ansprüche 1 bis 7, **dadurch gekennzeichnet, dass** er Schächte (20; 22) mit passiven Systemen (24) zur Dämpfung des aus dem Prüfstand (2) austretenden Lärms umfasst.

9. Prüfstand (2) nach Anspruch 8, **dadurch gekennzeichnet, dass** mindestens ein oder jedes Mikrofon (48; 50) außerhalb der Schächte (20; 22) angeordnet ist.

10. Prüfstand (2) nach einem der Ansprüche 8 oder 9, **dadurch gekennzeichnet, dass** sich das zweite Mikrofon (50) direkt unter einem der Schächte (20; 22) befindet.

11. Verfahren zum Dämpfen der Lärmemissionen einer Turbomaschine (4), die in einem Prüfstand (2) nach einem der Ansprüche 1 bis 10 getestet wurde, wobei der Prüfstand (2) ein Gerät (54) mit einer Eigenfrequenz umfasst, wobei das Verfahren die folgenden Schritte umfasst:
(a) Prüfen (100) der Turbomaschine (4);
(b) Aussenden (102) von Dämpfungs-Schallwellen (46), die in der Lage sind, den von der Turbomaschine (4) während des Schrittes (a) Test (100) abgegebenen Schallwellen (40) entgegenzuwirken, wobei das aktive System (38) Dämpfungswellen (46) bei der Eigenfrequenz des Gerätes (54) aussendet.

12. Verfahren nach Anspruch 11, **dadurch gekennzeichnet, dass** während des Schrittes (a) Test (100) das Gerät (54) mit seiner Eigenfrequenz und möglicherweise mit einer Harmonischen seiner Eigenfrequenz schwingt; und während des Schrittes (b) Aussenden (102) die Dämpfungswellen (46) das Gerät (54) gegenphasig zu seiner Vibration während des Schrittes (a) Test (100) erreichen.

13. Verfahren nach einem der Ansprüche 11 bis 12, **dadurch gekennzeichnet, dass** während des Schrittes (b) Aussenden (102) das aktive System (38) dazu konfiguriert ist, die Dämpfungswellen (46) an den Nachhall im Prüfstand (2), insbesondere an der Position des zweiten Mikrofons (50), anzupassen.

## Claims

1. Test bench (2) for a turbomachine (4), the test bench (2) comprising:
- an installation zone (16) for turbomachine (4);
- an active system (38) for attenuating the sound waves (40) emitted by a turbomachine (4), the active system (38) including a first microphone (48) placed downstream of the turbomachine (4), and a zone (42) for attenuating the turbomachine waves (40) with means (44) for emitting attenuation sound waves (46);
wherein
the active system (38) furthermore comprises a second microphone (50) placed downstream of the attenuation zone (42),
the active system (38) being configured to attenuate the turbomachine waves (40) as a function of the measurements from the first microphone (48) and from the second microphone (50),
the attenuation zone (42) being arranged between the first microphone (48) and the second microphone (50),
the bench comprising a tube (32) downstream of the installation zone (16) for a turbomachine (4), the attenuation zone (42) being arranged along the tube (32),
**characterized in that**
the bench comprises furthermore two partitions (36) forming with the tube (32) a chamber receiving the means (44) for emitting attenuation sound waves, the first and the second microphone (48, 50) being arranged outside of the chamber.

2. Test bench (2) according to Claim 1, **characterized in that** the first microphone (48) is placed upstream of the tube (32) and/or upstream of the attenuation zone (42).

3. Test bench (2) according to one of Claims 1 or 2, **characterized in that** the second microphone (50) is placed downstream of the tube (32).

4. Test bench (2) according to one of Claims 1 to 3, **characterized in that** it comprises a structural wall downstream of the tube (32), the second microphone (50) being closer to the tube (32) than to the structural wall, said structural wall potentially being perpendicular to the main elongation of the test bench (2).

5. Test bench (2) according to one of Claims 1 to 4, **characterized in that** it comprises a passage (6) for a flow from the turbomachine (4), the first microphone (48) and/or the second microphone (50) being placed in said passage (6).

6. Test bench (2) according to one of Claims 1 to 5, **characterized in that** the first microphone (48) and the second microphone (50) are axially spaced from each other by a distance D that is longer than or equal to 1 m, or 5 m, or 10 m, or 20 m.

7. Test bench (2) according to one of Claims 1 to 6, **characterized in that** the installation zone (16) for turbomachine (4) includes a central axis (19), potentially coaxial with the axis of rotation of the turbomachine (4), at least one or each microphone (48; 50) being placed on the central axis (19); or offset by less than 1 m, or less than 2 m, relative to said central axis (19).

8. Test bench (2) according to one of Claims 1 to 7, **characterized in that** it comprises chimneys (20; 22) with passive systems (24) for attenuating the noise propagating out of the test bench (2).

9. Test bench (2) according to Claim 8, **characterized in that** at least one or each microphone (48; 50) is placed outside the chimneys (20; 22).

10. Test bench (2) according to one of Claims 8 or 9, **characterized in that** the second microphone (50) is directly below one of the chimneys (20; 22).

11. Method for attenuating the noise emissions from a turbomachine (4) tested in a test bench (2) according to any of claims 1 to 10, the test bench (2) comprising an item of equipment (54) with a natural frequency, the method comprising the following steps:
(a) test (100) of the turbomachine (4);
(b) emission (102) of attenuation sound waves (46) capable of opposing the sound waves (40) emitted by the turbomachine (4) during the step (a) test (100), the active system (38) emitting attenuation waves (46) at the natural frequency of the item of equipment (54).

12. Method according to Claim 11, **characterized in that** during the step (a) test (100), the item of equipment (54) vibrates at its natural frequency, and potentially at a harmonic of its natural frequency; and during the step (b) emission (102), the attenuation waves (46) reach said item of equipment (54) in opposition of phase compared with its vibration during the step (a) test (100).

13. Method according to one of Claims 11 to 12, **characterized in that** during the step (b) emission (102), the active system (38) is configured to match the attenuation waves (46) with the reverberation in the test bench (2), in particular at the position of the second microphone (50).
